# EUROPÄISCHE PATENTSCHRIFT

(11) **EP 0 553 431 B1**
(45) Veröffentlichungstag und Bekanntmachung des Hinweises auf die Patenterteilung: **12.04.1995**
(21) Anmeldenummer: 92120266.9
(22) Anmeldetag: 27.11.1992
(51) Int. Cl.: H01M 2/24

(54) **Zangengeschweisster Zellenverbinder**
Spot-welded intercell connector
Connecteur intercellulaire obtenu par soudage par points

(30) Priorität: 30.01.1992 DE 4202498
(43) Veröffentlichungstag der Anmeldung: 04.08.1993
(73) Patentinhaber: VARTA Batterie Aktiengesellschaft, D-30405 Hannover (DE)
(72) Erfinder: Salamon, Klaus, Dr., W-6000 Frankfurt am Main 70 (DE)
(74) Vertreter: Kaiser, Dieter Ralf, Dipl.-Ing.

(56) Entgegenhaltungen:
- FR-A- 2 068 830
- FR-A- 2 101 526
- GB-A- 1 114 332
- US-A- 3 388 005
- US-A- 3 869 316

## Beschreibung

Die Erfindung betrifft einen Zellenverbinder zum flüssigkeitsdichten Verbinden von Plattengruppen in benachbarten Zellen einer Blei-Säurebatterie, welcher zwei mit Polbrücken verbundene, zur Zellentrennwand parallel ausgerichtete und an dieser beiderseits gegenüberliegende Ohrteile umfaßt, die durch eine Öffnung der Zellentrennwand hindurch miteinander verschweißt sind.

Zellenverbinder stellen die Strombrücke zwischen einem Elektrodensatz der einen Batteriezelle und dem Elektrodensatz entgegengesetzter Polarität der benachbarten Batteriezelle dar und müssen in dieser Eigenschaft gegen die zwischenliegende Zellentrennwand zuverlässig abgedichtet sein, um eine parasitäre Ionenleitung über Kriechpfade für den Elektrolyten auszuschließen.

Diesem Zweck dienen die verschiedensten Konstruktionen derartiger Zellenverbinder. Beispielsweise wird der Verbinder aus zwei Polbrücken gebildet, auf denen zwei Pole oder Ohrteile senkrecht stehen. Die Ohrteile sind parallel zur Trennwand ausgerichtet und liegen sich an dieser einander gegenüber. Durch eine in Höhe der Ohrteile in der Trennwand befindliche Öffnung hindurch werden sie elektrisch und mechanisch verbunden. Dies kann beispielsweise gemäß GB-PS 1 401 361 mittels eines durch die Öffnung gesteckten Bolzens geschehen, dessen beide Enden von den Ohrteilen, die in diesem Falle Löcher besitzen, aufgenommen und mit diesen verschweißt werden.

Anstelle des Bolzens kann, wie der GB-PS 1 328 316 entnehmbar, auch ein am einen Ohrteil vorhandener Vorsprung durch die Trennwand-Öffnung hindurchragen und über eine Widerstandsschweißung mit dem gegenüberliegenden Ohrteil, das eine mit dem Vorsprung korrespondierende Ausnehmung besitzt, vereinigt werden. Unter der gleichzeitigen Wirkung des Preßdrucks einer an die Ohrteile angelegten Schweißzange und des Schweißstromes findet die Fusion statt, wobei auch alle in dem Berührungsbereich zwischen Vorsprung und Ausnehmung ursprünglich verbliebenen Hohlräume mit schmelzflüssigem Material ausgefüllt werden.

Bei anderen Zellenverbindern wiederum, denen auch der erfindungsgemäße Zellenverbinder gattungsmäßig zuzurechnen ist, sind die der Trennwand anliegenden Seiten der Ohrteile glattflächig ausgebildet und berühren sich zunächst nicht (vgl. z.B. DE-PS 2 455 348). Allein durch den bereits vor dem Einschalten des Schweißstromes gezielt ausgeübten Druck einer angelegten Zange drückt sich das weiche Blei in die Wandöffnung hinein, so daß es zu einer ersten kleinflächigen Kontaktierung zwischen den Ohrteilen im Zentrum der Wandöffnung kommt. Der hohe Anfangswiderstand dieses Kontaktes führt zu einer raschen Aufheizung des Bleimaterials in diesem Bereich durch den jetzt einsetzenden Strom, so daß es aufschmilzt. Unter dem weiterhin anhaltenden Druck der Schweißzange bildet sich schließlich eine den gesamten Öffnungsquerschnitt erfassende Schmelzzone aus.

Praktische Erfahrungen haben gezeigt, daß die erstarrte Verbindung häufig kein homogenes Gefüge aufweist, sondern mit gravierenden Fehlern behaftet ist, die sich im Schliffbild durch Lunker, im Bereich des oberen Randes der Öffnung sogar äußerlich durch "Einfallstellen" zu erkennen geben. Dabei fällt auf, daß die Lunker in ihrer Richtung, von einer Mittellinie ausgehend, deutlich zu diesen Einfallstellen hin orientiert sind.

Während Lunker an sich auf einer Volumenkontraktion, hier von Pb_{liquid} zu Pb_{solid} mit ΔV ≈ -3%, beruhen und unvermeidbar sind, geben Untersuchungen solcher Zellenverbinder zu der Vermutung Anlaß, daß bei diesen Lunkern auch andere Einflüsse eine Rolle spielen. Bei größeren Lunkern besteht offenbar eine Tendenz zur Öffnung nach außen, diese könnte der Batteriesäure einen Zutritt ins Innere der Verbindungsbrücke verschaffen, so daß Korrosionsschäden befürchtet werden müssen.

Der Erfindung liegt daher die Aufgabe zugrunde, bei der Herstellung von Zellenverbindern mit der Technik des Zangenschweißens Maßnahmen anzugeben, die eine einwandfreie Verbindung gewährleisten.

Die Aufgabe wird erfindungsgemäß durch die im Patentanspruch 1 angegebene Maßnahme gelöst.

Es hat sich nämlich gezeigt, daß es vorteilhaft ist, die Innenseiten der Ohrteile, die der Zellentrennwand plan und dicht anliegen, mit mehreren rillenförmigen Riefen, mindestens jedoch einer Riefe, zu versehen, welche zumindest aus dem Einzugsbereich der Wandöffnung heraus senkrecht nach oben verlaufen. In einer besonders vorteilhaften Ausgestaltung der Erfindung können sich die Riefen auch über die volle Höhe der Innenseiten der Ohrteile erstrecken.

Mit dieser Maßnahme wird offenbar eine Formentlüftung erreicht, und die erwähnten Einfallstellen in Verbindung mit den zu ihnen ausgerichteten Lunkern, die auf eine unterdrückte Entgasung hindeuten, werden weitestgehend vermieden.

Das Zustandekommen von Gaseinschlüssen im Verbinder beim Zangenschweißen und deren Verhinderung durch die erfindungsgemäßen Maßnahmen wird im folgenden anhand der Figuren erläutert.

Figur 1 zeigt die Schweißzone eines herkömmlichen Verbinders mit "Einfallstellen" und Lunkern.

Figur 2 zeigt den Bereich der Trennwand-Öffnung im Zustand nach dem anfänglichen stromlosen Extrudieren der Ohrteile im Schnitt.

Figur 3 zeigt den Öffnungsbereich von Figur 2 nach erfolgter Verschweißung in einem Aufriß.

Figur 4 zeigt ein Ohrteil eines erfindungsgemäßen Verbinders mit Entlüftungsriefen.

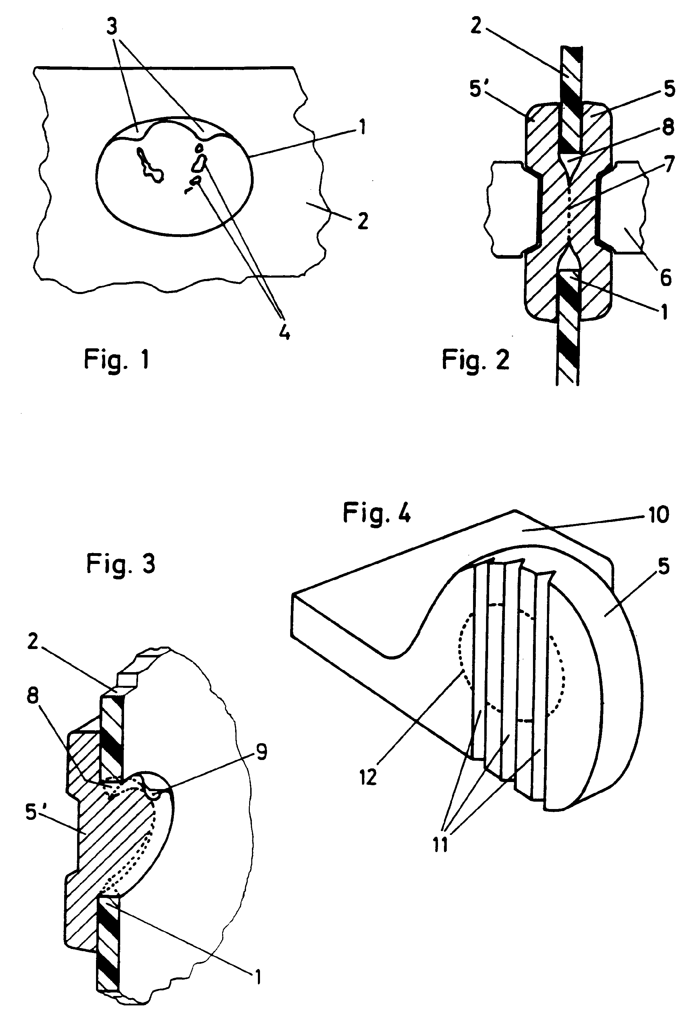

In Fig. 1 ist eine Bruchfläche eines herkömmlichen Verbinders, die Öffnung 1 einer Zellentrennwand 2 ausfüllend, mit den typischen Schadensbefunden dargestellt. An der Grenze zur oberen Zylinderwand der Öffnung weist das erstarrte Blei Einfallstellen 3 auf, zu denen weiter im Innern der Verschmelzungszone mehrere Lunker 4 ausgerichtet sind. Der Öffnungsumriß ist oval gestaltet, um Verwindungskräfte am Verbinder aufzufangen und eine kleinere Bauhöhe der Batterie zu ermöglichen.

Gemäß Fig. 2 werden die beiden Ohrteile 5,5′ nach exakter Positionierung beiderseits der Zellentrennwand 1 in einer ersten Phase allein durch den Preßdruck der Schweißzange 6, ohne daß Strom fließt, in die Trennwandöffnung 1 hinein verformt, bis von den verformten Innenflächen eine Kontaktzone 7 ausgebildet ist. Daraufhin wird der Schweißstrom eingeschaltet und allmählich auf seinen maximalen Wert erhöht. Während das Metall schmilzt, bleibt zunächst ein leerer Raum in Form eines an der ovalzylindrischen Öffnung umlaufenden Ringes 8 (vgl. Fig.3) erhalten, in den sich Luftreste zurückgezogen haben. Das nunmehr unter einem Schweißstrom von ca. 10kA und bei einem Zangendruck von ca. 50bar restlos aufgeschmolzene Blei füllt aufgrund der Schwerkraft alsbald den unteren Teil des Ringes auf und verdrängt die Luft nach oben. Dort kann sie jedoch wegen der dichten Anlage der Ohrteile an der Zellentrennwand nicht entweichen und bleibt vor dem oberen Rand der Trennwandöffnung, wie in Fig.3 dagestellt, als Blase 9 eingeschlossen.

Für den gleich nach dem Aufschmelzen des gesamten Verbinderquerschnitts einsetzenden Kühlvorgang über die Trennwand und über die Zange stellen diese "Luftpolster" eine thermische Isolierung dar; daher erstarrt die Schmelze in dieser Region zuletzt. Die Bildung von Lunkern in diesem Bereich ist somit vorgezeichnet. Auch ihre Öffnung nach außen erscheint möglich, wenn die thermischen Bedingungen dies erlauben.

Durch die erfindungsgemäße Maßnahme wird die Einschließung von Luft in der oberen Grenzzone zwischen dem Blei und dem Kunststoff der Trennwand jedoch verhindert und die Gefahr einer Verbinder-Korrosion infolge Eindringens von Säure in die aufgeplatzten Hohlräume gebannt.

In Fig. 4 ist eine Verbinder-Hälfte einschließlich Polbrücke 10 dargestellt, deren Ohrteil 5 erfindungsgemäß auf seiner Innenseite, welche der Zellentrennwand anliegt, Riefen 11 aufweist. In dieser besonders günstigen Ausführungsform der Erfindung erstrecken sich die Riefen über die volle Höhe des Ohrteiles und durchqueren dabei den Einzugsbereich 12 der Wandöffnung.

Die Figur zeigt trotz des Fehlens der Trennwand in dieser Darstellung augenfällig, daß die Riefen als Entlüftungskanäle fungieren für eine Schmelzform, die von dem ovalen Zylinder der Wandöffnung sowie den stirnseitigen Abdeckungen durch die Innenseiten der Ohrteile gebildet wird. Dabei liegt es im Rahmen der Erfindung, Breite und Tiefe der Entlüftungsriefen so zu bemessen, daß sie nicht unter dem Druck der Zange in den Kunststoff der Zellentrennwand eindringen und durch das Material der Trennwand verstopft werden können.

## Patentansprüche

1. Zellenverbinder zum flüssigkeitsdichten Verbinden von Plattengruppen in benachbarten Zellen einer Blei-Säurebatterie, welcher zwei mit Polbrücken verbundene, zur Zellentrennwand parallel ausgerichtete und dieser beiderseits gegenüberliegende Ohrteile umfaßt, die durch eine Öffnung der Zellentrennwand hindurch miteinander verschweißt sind, dadurch gekennzeichnet, daß die Ohrteile (5) auf ihren der Zellentrennwand anliegenden Innenseiten mit einer oder mehreren Entlüftungsriefen (11) versehen sind, die zumindest aus dem Einzugsbereich (12) der Wandöffnung (1) heraus senkrecht nach oben verlaufen.

2. Zellenverbinder nach Anspruch 1, dadurch gekennzeichnet, daß die Entlüftungsriefen sich senkrecht über die volle Höhe der Innenseiten und über den Einzugsbereich der Wandöffnung hinweg erstrecken.

## Claims

1. Intercell connector for connecting in liquid-tight manner plate groups in adjacent cells of a lead acid battery, the intercell connector including two ear-shaped parts which are connected to terminal bars, are aligned parallel with respect to the cell dividing wall, lie opposite the latter on either side and are welded to one another through an opening in the cell dividing wall, characterized in that the ear-shaped parts (5) are provided, on their inner sides bearing against the cell dividing wall, with one or more venting grooves (11) which run perpendicularly upwards at least out of the region (12) near to the wall opening (1).

2. Intercell connector according to Claim 1, characterized in that the venting grooves extend perpendicularly over the full height of the inner sides and beyond the region near to the wall opening.

## Revendications

1. Connecteur intercellulaire pour la connexion étanche aux liquides de groupes de plaques dans des cellules voisines d'une batterie d'accumulateur au plomb, connecteur comprenant deux parties en forme d'oreilles reliées à des ponts polaires, orientées parallèlement à la paroi de séparation des cellules, et placées l'une en face de l'autre des deux côtés de celle-ci, ces parties étant soudées ensemble à travers une ouverture de la paroi de séparation des cellules, connecteur intercellulaire caractérisé en ce que les parties en forme d'oreilles (5) sont munies sur leur côté interne s'appliquant contre la paroi de séparation des cellules d'une ou plusieurs rainures de désaération (11) , qui s'étendent verticalement vers le haut au moins hors de la zone d'attraction (12) de l'ouverture (1) de la paroi.

2. Connecteur intercellulaire selon la revendication 1 caractérisé en ce que les rainures de désaération s'étendent verticalement sur toute la hauteur des côtés internes et au-delà de la zone d'attraction de l'ouverture de la paroi.
